# EUROPÄISCHE PATENTSCHRIFT

(11) **EP 2 541 755 B1**
(45) Veröffentlichungstag und Bekanntmachung des Hinweises auf die Patenterteilung: **30.04.2014**
(21) Anmeldenummer: 11171886.2
(22) Anmeldetag: 29.06.2011
(51) Int. Cl.: H02P 5/74, H02P 25/22, B60L 11/18, H02J 7/14, H02K 3/28

(54) **Antriebsvorrichtung für ein Fahrzeug**
Drive device for a vehicle
Dispositif d'entraînement pour un véhicule

(43) Veröffentlichungstag der Anmeldung: 02.01.2013
(73) Patentinhaber: Siemens Aktiengesellschaft, 80333 München (DE)
(72) Erfinder: Bakran, Mark-Matthias, 91052 Erlangen (DE)

(56) Entgegenhaltungen:
- DE-A1-102008 034 663
- DE-A1-102009 027 220
- GB-A- 2 350 946

## Beschreibung

Die vorliegende Erfindung betrifft eine Antriebsvorrichtung für ein Fahrzeug mit einer ersten Gleichstromversorgungseinrichtung, einer ladbaren zweiten Gleichstromversorgungseinrichtung und einem Wechselstrommotor. Darüber hinaus betrifft die vorliegende Erfindung ein entsprechendes Verfahren zum Betreiben eines Fahrzeugs.

Elektrisch betriebene Fahrzeuge werden meist mit einer Batterie versorgt. Für derartige Batterien hat sich eine Batteriespannung von maximal 400V etabliert. Das Laden der Batterien erfolgt entweder am einphasigen 230V Netz oder mittels eines 400V-Drehstromnetzes. Für einen Stromrichter, der zum Laden einer Batterie an dem 400V-Drehstromnetz betrieben wird, ist jedoch eine Zwischenkreisspannung von mehr als 650V notwendig. Dies ist jedoch nicht mit einer 400V-Batterie vereinbar.

Viele Elektrofahrzeuge werden heute nur an einem einphasigen Netz geladen, sodass sich das oben genannte Spannungsproblem nicht ergibt. Ist das Laden der Batterie an einem dreiphasigen Netz vorgesehen, so besteht die Möglichkeit, einen Transformator zur Spannungsanpassung zu verwenden. Alternativ kann das Antriebssystem auf eine Spannung von 700V bis 800V im Zwischenkreis ausgelegt werden, sodass ein Laden direkt aus dem 400V-Drehstromnetz möglich ist. Es ist also ein zusätzlicher Transformator im Fahrzeug vorzusehen oder der Pulswechselrichter und die Batterie sind auf entsprechend höhere Spannung auszulegen.

Die DE 10 2008 034 663 A1 beschreibt ein Elektroantriebssystem für ein Fahrzeug mit einer Hochspannungsbatterie und einer Niederspannungsbatterie. Das System umfasst einen AC-Elektromotor und ein doppelseitiges Wechselrichtersystem, das mit dem AC-Elektromotor gekoppelt ist. Der AC-Elektromotor weist einen ersten und einen zweiten Satz von Wicklungen auf, die gemeinsame Statorschlitze besitzen. Das doppelseitige Wechselrichtersystem treibt den AC-Elektromotor mit Energie aus der Hochspannungsbatterie und der Niederspannungsbatterie an. Zudem verwendet das doppelseitige Wechselrichtersystem ein erstes Wechselrichter-Untersystem, das zwischen den ersten Satz von Wicklungen und die Hochspannungsbatterie gekoppelt ist, und ein zweites Wechselrichter-Untersystem, das zwischen den zweiten Satz von Wicklungen und die Niederspannungsbatterie gekoppelt ist.

Des Weiteren beschreibt die GB 2 350 946 A ein Energieversorgungssystem für ein Kraftfahrzeug mit einem Generator, der einen Rotor, eine erste Statorwicklung und eine zweite Statorwicklung umfasst. Eine erste Brückenschaltung, die mit der ersten Statorwicklung verbunden ist, dient zum Gleichrichten der Spannung der ersten Statorwicklung, um eine erste Ausgangsspannung zu erzeugen. Eine zweite Brückenschaltung, die mit der zweiten Statorwicklung verbunden ist, dient zum Gleichrichten der Spannung der zweiten Statorwicklung, um eine zweite Ausgangsspannung bereitzustellen. Des Weiteren umfasst das Energieversorgungssystem eine Steuereinheit, die mit der zweiten Brückenschaltung verbunden ist und mit der die zweite Brückenschaltung als Inverter betrieben werden kann, wenn sich der Rotor nicht bewegt.

Schließlich beschreibt die DE 2009 027 220 A1 eine Vorrichtung zur Versorgung eines elektrischen Antriebs für ein Kraftfahrzeug mit einem Energienetz. Dabei weist das Energienetz ein erstes und ein zweites Energienetz auf, wobei das erste Energienetz einen ersten Umrichter aufweist, der zwischen einer Brennstoffzelleneinheit und dem Antrieb angeordnet ist, wobei das zweite Energienetz einen zweiten Umrichter aufweist, der zwischen dem Energiespeicher und dem Antrieb angeordnet ist, und wobei der erste Umrichter vom zweiten Umrichter entkoppelt ist.

Die Aufgabe der vorliegenden Erfindung besteht somit darin, eine Antriebsvorrichtung bereitzustellen, bei der bei vermindertem Bauvolumen zum Laden eine höhere Zwischenkreisspannung möglich ist, als beispielsweise die Batterie des Fahrzeugs aufweist. Darüber hinaus soll ein entsprechendes Betriebsverfahren vorgeschlagen werden.

Erfindungsgemäß wird diese Aufgabe durch die Antriebsvorrichtung in Anspruch 1 und das Verfahren in Anspruch 5 gelöst.

In vorteilhafter Weise besitzt also der Fahrmotor eine Doppelsternwicklung (zwei Sternwicklungen) und zwei zugeordnete Pulswechselrichter, auf die die erhöhte Zwischenkreisspannung aufgeteilt werden kann, indem die Pulswechselrichter in Serie betrieben werden. Im Betriebsfall hingegen werden beide Pulswechselrichter parallel mit der niedrigeren Zwischenkreisspannung betrieben. Damit ist kein Transformator notwendig und ebenfalls kein Pulswechselrichter, der für die erhöhte Zwischenkreisspannung ausgelegt ist.

Die erste Gleichstromversorgungseinrichtung besitzt eine Steckeinrichtung zum Anstecken an ein öffentliches Versorgungsnetz. Dabei kann die Versorgung mit Drehstrom oder bereits gleichgerichtet mit Gleichstrom erfolgen.

Die Antriebsvorrichtung bzw. das Fahrzeug weist einen Gleichrichter auf, der den Drehstrom in einen Gleichstrom umsetzt.

Die zweite Gleichstromversorgungseinrichtung weist eine oder mehrere Batterien auf.

In einer bevorzugten Ausführungsform wird von der ersten Gleichstromversorgungseinrichtung eine erste Spannung geliefert, die mindestens um den Faktor √2 größer ist als die verkettete Netzanschlussspannung. Dieses Verhältnis ergibt gleichzeitig eine um √2 höhere Spannung als die typische Batteriespannung von 400V.

Die Pulswechselrichter können im Lademodus von der Steuereinrichtung alternativ so angesteuert werden, dass die Stromübertragung über die zwei Sternwicklungen einphasig erfolgt. Dadurch lässt sich verhindern, dass der Elektromotor bei der Nutzung als Transformator ein Moment entwickelt. Dabei ist es besonders vorteilhaft, wenn die Stromübertragung in einer Phase gesperrt ist, und die beiden anderen Phasen um 180° versetzt sind.

Wie oben bereits angedeutet wurde, lässt sich eine derartige Antriebsvorrichtung besonders vorteilhaft in einem Fahrzeug nutzen.

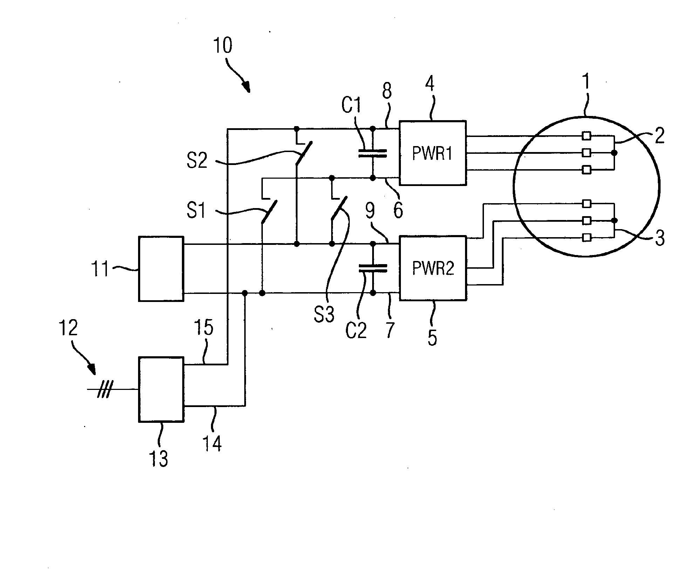

Die vorliegende Erfindung wird nun anhand der beigefügten Figur näher erläutert, die ein Schaltbild einer erfindungsgemäßen Antriebsvorrichtung für ein Fahrzeug wiedergibt.

Die nachfolgend näher geschilderten Ausführungsbeispiele stellen bevorzugte Ausführungsformen der vorliegenden Erfindung dar.

Entsprechend dem Beispiel der Figur kann eine Zwischenkreisspannung generiert werden, die maximal doppelt so hoch ist wie die normalerweise verwendete Spannung. Beträgt die Zwischenkreisspannung, die von der Batterie geliefert wird, beispielsweise 400V, so kann entsprechend dem Beispiel der Figur eine Zwischenkreisspannung von bis zu 800V verwendet werden. Für den Antrieb ist hier ein Dreiphasen-Fahrmotor 1 mit Doppelsternwicklung vorgesehen. Unter einer Doppelsternwicklung werden zwei Sternwicklungen verstanden, die induktiv miteinander gekoppelt sind. Vorzugsweise liegt die erste Sternwicklung 2 der Doppelsternwicklung in den gleichen Nuten wie die zweite Sternwicklung 3 (D.h. die einer ersten Phase zugeordnete Wicklung der ersten Sternwicklung liegt in der gleichen Nut wie die der ersten Phase zugeordnete Wicklung der zweiten Sternwicklung; Gleiches gilt für die anderen beiden Phasen.). Beispielsweise liegen die Sternwicklungen 2, 3 in den Nuten radial übereinander. Die erste Sternwicklung 2 wird von einem ersten Pulswechselrichter 4 und die zweite Sternwicklung 3 wird von einem zweiten Pulswechselrichter 5 angesteuert. Die beiden Pulswechselrichter 4, 5 werden durch eine in der Figur nicht dargestellte Steuereinrichtung getaktet bzw. angesteuert. Darüber hinaus weisen die beiden Pulswechselrichter 4, 5 jeweils einen ersten Gleichspannungsanschluss 6, 7 und einen zweiten Gleichspannungsanschluss 8, 9 auf. Zwischen den beiden Gleichspannungsanschlüssen jedes Pulswechselrichters 4, 5 ist ein Glättungskondensator C1, C2 geschaltet.

Die beiden Pulswechselrichter 4, 5 werden über einen Zwischenkreis 10 mit Gleichspannung bzw. Gleichstrom versorgt. Während des Betriebs des Fahrzeugs dient eine Batterie 11 als Stromquelle bzw. ladbare zweite Gleichstromversorgungseinrichtung. Sie liefert beispielsweise eine Gleichspannung von 400V. Ihre beiden Pole sind direkt an den ersten Gleichspannungsanschluss 7 und den zweiten Gleichspannungsanschluss 9 des zweiten Pulswechselrichters 5 angeschlossen. Der erste Gleichspannungsanschluss 6 des ersten Pulswechselrichters 4 ist über einen Schalter S1 an den ersten Gleichspannungsanschluss 7 des zweiten Pulswechselrichters 5 bzw. an den einen Pol der Batterie 11 geschaltet. Der zweite Gleichspannungsanschluss 8 des ersten Pulswechselrichters 4 ist über einen zweiten Schalter S2 an den zweiten Gleichspannungsanschluss 9 des zweiten Pulswechselrichters 5 bzw. an den anderen Pol der Batterie 11 geschaltet. Darüber hinaus ist der erste Gleichspannungsanschluss 6 des ersten Pulswechselrichters 4 über einen Schalter S3 mit dem zweiten Gleichspannungsanschluss 9 des zweiten Pulswechselrichters 5 verbunden.

Zum Laden der Batterie 11 dient beispielsweise ein 400V-Drehstromnetz 12. Das Gleichrichten des Drehstroms erfolgt durch einen Gleichrichter 13, dessen erster Gleichspannungsausgang 14 mit dem ersten Gleichspannungsanschluss 7 des zweiten Pulswechselrichters 5 bzw. mit dem einen Pol der Batterie 11 verbunden ist, und dessen zweiter Gleichspannungsausgang 15 mit dem zweiten Gleichspannungsanschluss 8 des ersten Pulswechselrichters 4 verbunden ist. Als erste Gleichspannungsversorgungseinrichtung im Sinne der Patentansprüche zählt hier also der Gleichrichter 13, der in das Fahrzeug integriert sein kann. Ist er nicht in das Fahrzeug integriert, so können entsprechende Gleichspannungsanschlüsse am Fahrzeug als erste Gleichstromversorgungseinrichtung angesehen werden.

Die Schalter S1, S2 und S3 stellen zusammen eine Schalteinrichtung dar. Die Schalteinrichtung lässt sich ebenfalls durch die nicht dargestellte Steuereinrichtung steuern.

Im normalen Betrieb (Betriebsmodus) wird der Wechselstrommotor 1 durch die Batterie 11 gespeist. Hierzu steuert die Steuereinrichtung die Schalteinrichtung derart an, dass die Schalter S1 und S2 geschlossen und der Schalter S3 offen ist. Dadurch sind die beiden Pulswechselrichter 4 und 5 parallel geschaltet, und an beiden liegt die Batteriespannung der Batterie 11 an. Die beiden Pulswechselrichter werden so angesteuert, dass sie die anliegende Gleichspannung jeweils in eine Dreiphasen-Spannung wandeln und die beiden Sternwicklungen 2, 3 entsprechend versorgen. Die Wirkungen der beiden Sternwicklungen 2, 3 addieren sich im Wesentlichen.

Zum Laden der Batterie 11 (Lademodus) wird das Drehstromnetz 12 verwendet, wobei der Drehstrom durch den Gleichrichter 13 in einen Gleichstrom gewandelt wird. Da der Gleichrichter 13 hier am 400V-Drehstromnetz 12 betrieben wird, liegt seine Ausgangsspannung und damit die Zwischenkreisspannung oberhalb von 650V. Da die beiden Pulswechselrichter 4 und 5 jedoch nur für 400V ausgelegt sind, werden sie durch die Schalteinrichtung in Serie geschaltet. Im Lademodus werden also die beiden Schalter S1 und S2 geöffnet, während der Schalter S3 geschlossen wird. Die Zwischenkreisspannung teilt sich damit auf die beiden Pulswechselrichter 4, 5 auf. Die Aufteilung kann symmetrisch oder unsymmetrisch erfolgen.

Erzeugt der Gleichrichter 13 beispielsweise eine Gleichspannung von 800V und einen Strom von 100A, so fällt über beide Pulswechselrichter 4, 5 jeweils eine Spannung von 400V ab. Die Batterie 11 wird somit also mit 400V geladen. Die restliche Spannung, hier ebenfalls 400V, die an dem ersten Pulswechselrichter 4 abfällt bzw. die korrespondierende Leistung soll ebenfalls zum Laden der Batterie 11 verwendet werden. Dazu wird der erste Pulswechselrichter 4 in einer speziellen Art als Wechselrichter betrieben (einphasig oder zweiphasig; siehe unten). Die Ausgangsleistung des ersten Pulswechselrichters 4 wird innerhalb des Elektromotors 1 von der ersten Sternwicklung 2 auf die zweite Sternwicklung 3 übertragen. Der Elektromotor wird damit als Transformator genutzt. Der zweite Pulswechselrichter 5 wird im Lademodus als Gleichrichter betrieben. Er richtet den Wechselstrom aus der zweiten Sternwicklung 3 gleich. Die Ausgangsspannung an den beiden Gleichspannungsanschlüssen 7, 9 beträgt hier wieder 400V. Da über den Schalter S3 von dem ersten Pulswechselrichter 4 ein Strom von 100A kommt und nun zusätzlich von dem zweiten Pulswechselrichter 5 ein Strom von 100A geliefert wird, ergibt sich in dem gewählten Beispiel für die Batterie 11 ein Speisestrom von 200A. Die Ladespannung liegt bei 400V. Damit liegt ein Leistungsgleichgewicht zwischen der von dem Gleichrichter 13 gelieferten Leistung (800V·100A) und der bei der Batterie 11 ankommenden Leistung (400V·200A) vor.

Entsprechend der vorliegenden Erfindung werden also im normalen Betrieb zwei Pulswechselrichter für den Fahrmotor genutzt, welche jeweils eine Sternwicklung speisen und eine Zwischenkreisspannung von bis zu 400V verwenden. Die Doppelsternwicklung ist dabei so ausgeführt, dass sich die Wicklungen in den gleichen Nuten befinden. Damit ist eine bestmögliche Kopplung zwischen den beiden Sternwicklungen sichergestellt (prinzipiell können die Wicklungen auch auf andere Weise nahe beieinander angeordnet sein).

Für den Ladebetrieb werden die beiden Stromrichter voneinander getrennt und die zwei Zwischenkreise in Serie geschaltet. Die Gesamtspannung des Zwischenkreises kann somit das Doppelte eines Einzelzwischenkreises betragen. Dieser Gesamtzwischenkreis bildet nun den Zwischenkreis für den Ladegleichrichter 13. Da jedoch nur an einer Zwischenkreishälfte die Batterie 11 angeschlossen ist (in der Figur der untere Zwischenkreis), muss die Leistung vom anderen Zwischenkreis dorthin geführt werden. Dies erfolgt, wie oben geschildert wurde.

Um während des Ladens sicher kein Moment zu erzeugen, kann die Übertragung der Leistung über den Trafo (hier Fahrzeugmotor) z.B. einphasig realisiert werden. Dabei bekommt eine Phase eine Taktsperre, und die zwei verbliebenen Phasen arbeiten um 180° versetzt. Da die Ladeleistung typisch unterhalb der Fahrleistung des Pulswechselrichters liegt, ist diese begrenzte Ausnutzung des Stromrichters möglich.

In dem oben dargestellten Beispiel ist der Fahrmotor mit Doppelsternwicklung, also zwei Sternwicklungen, realisiert. Prinzipiell ist es natürlich auch möglich, mehr als zwei Sternwicklungen vorzusehen. In diesem Fall kann die Zwischenkreisspannung auch mehr als das Doppelte der Batteriespannung betragen. In jedem Fall werden dann die Sternwicklungen bzw. die korrespondierenden Pulswechselrichter während des Normalbetriebs parallel betrieben und während des Ladens jeweils mit einem der Pulswechselrichter in Serie geschaltet.

## Patentansprüche

1. Antriebsvorrichtung für ein Fahrzeug mit
- einer ersten Gleichstromversorgungseinrichtung (13),
- einer ladbaren zweiten Gleichstromversorgungseinrichtung (11), die eine Batterie umfasst, und
- einem Wechselstrommotor (1), wobei
- der Wechselstrommotor (1) zwei Sternwicklungen (2,3) aufweist,
- die zwei Sternwicklungen (2,3) jeweils in den gleichen Nuten angeordnet sind,
- jede der zwei Sternwicklungen (2,3) von je einem Pulswechselrichter (4,5) angesteuert ist, **dadurch gekennzeichnet, dass** die erste Gleichstromversorgungseinrichtung (13) eine Steckeinrichtung zum Anstecken an ein öffentliches Versorgungsnetz und einen Gleichrichter aufweist,
- eine Schalteinrichtung (S1,S2,S3) an die beiden Gleichstromversorgungseinrichtungen (11,13) geschaltet ist,
- in einem Betriebsmodus die Gleichspannungsanschlüsse (6,7,8,9) der beiden Pulswechselrichter (4,5) durch die Schalteinrichtung (S1,S2,S3) parallel an die erste und parallel an die zweite Gleichstromversorgungseinrichtung (11,13) angeschlossen sind,
- in einem Lademodus die Gleichspannungsanschlüsse (6,7,8,9) der beiden Pulswechselrichter (4,5) durch die Schalteinrichtung (S1,S2,S3) seriell an die erste Gleichstromversorgungseinrichtung (13) angeschlossen sind und sich eine Ausgangsspannung des Gleichrichters auf die beiden Pulswechselrichter (4,5) aufteilt,
- eine Steuereinrichtung die beiden Pulswechselrichter (4, 5) im Betriebsmodus so ansteuert, dass sie als Wechselrichter dienen, wobei Strom von der zweiten Gleichstromversorgungseinrichtung (11) über die beiden Pulswechselrichter (4,5) zum Wechselstrommotor (1) fließt,
- die Steuereinrichtung die beiden Pulswechselrichter (4,5) im Lademodus so ansteuert, dass der eine der Pulswechselrichter (4) als Wechselrichter und der andere der Pulswechselrichter (5) als Gleichrichter dienen, so dass Strom von der ersten Gleichstromversorgungseinrichtung (13) über den als Wechselrichter betriebenen Pulswechselrichter (4) in die erste (2) der beiden Sternwicklungen, von dort induktiv in die zweite (3) der beiden Sternwicklungen und anschließend über den als Gleichrichter betriebenen Pulswechselrichter (5) in die zweite Gleichstromversorgungseinrichtung (11) fließt und dass
- im Lademodus die Gleichspannungsanschlüsse (7,9) des als Gleichrichter dienenden Pulswechselrichters (5) durch die Schalteinrichtung (S1,S2,S3) parallel an der zweiten Gleichstromversorgungseinrichtung (11) angeschlossen sind.

2. Antriebsvorrichtung nach Anspruch 1, wobei die Pulswechselrichter (4,5) im Lademodus von der Steuereinrichtung so angesteuert sind, dass die Stromübertragung über die zwei Sternwicklungen (2,3) einphasig erfolgt.

3. Antriebsvorrichtung nach einem der vorhergehenden Ansprüche, wobei die Pulswechselrichter (4,5) im Lademodus von der Steuereinrichtung so angesteuert sind, dass die Stromübertragung über die zwei Sternwicklungen (2,3) in einer Phase gesperrt ist, und die beiden anderen Phasen um 180° versetzt liegen.

4. Fahrzeug mit einer Antriebsvorrichtung nach einem der vorhergehenden Ansprüche.

5. Verfahren zum Betreiben eines Fahrzeugs mit einer ersten Gleichstromversorgungseinrichtung (13), einer ladbaren zweiten Gleichstromversorgungseinrichtung (11), die eine Batterie umfasst, und einem Wechselstrommotor (1), wobei
- der Wechselstrommotor (1) zwei Sternwicklungen (2,3) aufweist,
- die zwei Sternwicklungen (2,3) jeweils in den gleichen Nuten angeordnet sind,
- jede der zwei Sternwicklungen (2,3) von je einem Pulswechselrichter (4,5) angesteuert wird, **dadurch gekennzeichnet, dass** die erste Gleichstromversorgungseinrichtung (13) eine Steckeinrichtung zum Anstecken an ein öffentliches Versorgungsnetz und einen Gleichrichter aufweist,
- in einem Betriebsmodus die Gleichspannungsanachlüsse (6,7,8,9) der beiden Pulswechselrichter (4,5) durch eine Schalteinrichtung (S1, S2, S3) parallel an die erste und parallel an die zweite Gleichstromversorgungseinrichtung (11,13) angeschlossen werden,
- in einem Lademodus die Gleichspanngsanschlüsse (6,7,8,9) der beiden Pulswechselrichter (4,5) durch die Schalteinrichtung (S1, S2, S3) seriell an die erste Gleichstromversorgungseinrichtung (13) angeschlossen werden und eine Ausgangsspannung des Gleichrichters auf die beiden Pulswechselrichter (4,5) aufteilt wird,
- die beiden Pulswechselrichter (4,5) im Betriebsmodus so angesteuert werden, dass sie als Wechselrichter dienen, wobei Strom von der zweiten Gleichstromversorgungseinrichtung (13) über die beiden Pulswechselrichter (4,5) zum Wechselstrommotor (1) fließt,
- die beiden Pulswechselrichter (4,5) im Lademodus so angesteuert werden, dass der eine der Pulswechselrichter (4) als Wechselrichter und der andere der Pulswechselrichter (5) als Gleichrichter dienen, so dass Strom von der ersten Gleichstromversorgungseinrichtung (13) über den als Wechselrichter betriebenen Pulswechselrichter (4) in die erste der beiden Sternwicklungen (2), von dort induktiv in die zweite der beiden Sternwicklungen (3) und anschließend über den als Gleichrichter betriebenen Pulswechselrichter (5) in die zweite Gleichstromversorgungseinrichtung (11) fließt, und dass
- im Lademodus die Gleichspannungsanschlüsse (7,9) des als Gleichrichter dienenden Pulswechselrichters (5) durch die Schalteinrichtung (S1, S2, S3) parallel an der zweiten Gleichstromversorgungseinrichtung (11) angeschlossen werden.

## Claims

1. Drive device for a vehicle with
- a first direct current supply device (13)
- a chargeable second direct current supply device (11), which includes a battery, and
- an alternating current motor (1), wherein
- the alternating current motor (1) comprises two star windings (2, 3),
- the two star windings (2, 3) are arranged in the same grooves in each case,
- each of the two star windings (2, 3) is actuated by a pulse inverter (4, 5),
**characterised in that**
the first direct current supply device (13) comprises a connecting device for connecting to a public mains network and a rectifier,
- a switching device (S1, S2, S3) is connected to the two direct current supply devices (11, 13),
- in an operational mode the direct current connections (6, 7, 8, 9) of the two pulse inverters (4, 5) are connected in parallel via the switching device (S1, S2, S3) to the first and second direct current supply device (11, 13) respectively,
- in a charging mode the direct current connections (6, 7, 8, 9) of the two pulse inverters (4, 5) are connected in series via the switching device (S1, S2, S3) to the first direct current supply device (13) and an output voltage of the rectifier is split between the two pulse inverters (4, 5),
- a control device which actuates the two pulse inverters (4, 5) in operational mode such that they serve as inverters, wherein current flows from the second direct current supply device (11) via the two pulse inverters (4,5) to the alternating current motor (1),
- the control device actuates the two pulse inverters (4,5) in charging mode such that one of the pulse inverters (4) serves as an inverter and the other of the pulse inverters (5) serves as a rectifier, in order that current flows from the first direct current supply device (13) via the pulse inverter (4) operated as an inverter into the first (2) of the two star windings, from there inductively into the second (3) of the two star windings and subsequently via the pulse inverter (5) operated as a rectifier into the second direct current supply device (11) and that
- in charging mode the direct current connections (7, 9) of the pulse inverter (5) serving as a rectifier are connected in parallel via the switching device (S1, S2, S3) to the second direct current supply device (11).

2. Drive device according to claim 1, wherein in charging mode the pulse inverters (4, 5) are actuated by the control device such that the transmission of current occurs in a single-phase manner via the two star windings (2, 3).

3. Drive device according to one of the preceding claims, wherein in charging mode the pulse inverters (4, 5) are actuated by the control device such that the transmission of current across the two star windings (2, 3) is blocked in one phase, and the two other phases are offset by 180°.

4. Vehicle with a drive device according to one of the preceding claims.

5. Method for operating a vehicle with a first direct current supply device (13), a chargeable second direct current supply device (11), including a battery and an alternating current motor (1), wherein
- the alternating current motor (1) comprises two star windings (2, 3),
- the two star windings (2, 3) are arranged in the same grooves in each case,
- each of the two star windings (2, 3) is actuated by a pulse inverter (4, 5) in each instance,
**characterised in that**
the first direct current supply device (13) comprises a connecting device for connecting to a public mains network and a rectifier,
- in an operational mode the direct current connections (6, 7, 8, 9) of the two pulse inverters (4, 5) are connected in parallel via a switching device (S1, S2, S3) to the first and second direct current supply device (11, 13) respectively,
- in a charging mode the direct current connections (6, 7, 8, 9) of the two pulse inverters (4, 5) are connected in series via the switching device (S1, S2, S3) to the first direct current supply device (13) and an output voltage of the rectifier is split between the two pulse inverters (4, 5),
- both pulse inverters (4, 5) are actuated in operational mode such that they serve as inverters, wherein current flows from the second direct current supply device (13) via the two pulse inverters (4, 5) to the alternating current motor (1),
- in charging mode the two pulse inverters (4, 5) are actuated such that one of the pulse inverters (4) serves as an inverter and the other pulse inverter (5) serves as a rectifier, in order that current flows from the first direct current supply device (13) via the pulse inverter (4) operating as an inverter into the first of the two star windings (2), and from there inductively into the second of the two star windings (3) and subsequently via the pulse inverter (5) operating as a rectifier into the second direct current supply device (11), and that
- in charging mode the direct current connections (7, 9) of the pulse inverter (5) serving as a rectifier are connected in parallel via the switching device (S1, S2, S3) to the second direct current supply device (11).

## Revendications

1. Système d'entraînement pour un véhicule comprenant
- un premier dispositif ( 13 ) d'alimentation en tension continu,
- un deuxième dispositif ( 11 ) d'alimentation en courant continu qui peut être chargé et qui comprend un accumulateur, et
- un moteur ( 1 ) à courant alternatif, dans lequel
- le moteur ( 1 ) à courant alternatif a deux enroulements ( 2, 3 ) en étoile,
- les deux enroulements ( 2, 3 ) en étoile sont disposés respectivement dans les mêmes encoches,
- chacun des deux enroulements ( 2, 3 ) en étoile est commandé respectivement par un onduleur ( 4, 5 ) à impulsions, **caractérisé en ce que** le premier dispositif ( 13 ) d'alimentation en courant continu a un dispositif d'enfichage à un secteur d'alimentation public et un redresseur,
- un dispositif ( S1, S2, S3 ) de commutation est relié aux deux dispositifs ( 11, 13 ) d'alimentation en courant continu,
- dans un mode de fonctionnement les bornes ( 6, 7, 8, 9 ) de courant continu des deux onduleurs ( 4, 5 ) à impulsions sont montées, par le dispositif ( S1, S2, S3 ) de commutation, en parallèle sur le premier et en parallèle sur le deuxième dispositif ( 11, 13 ) d'alimentation en courant continu,
- dans un mode de charge, les bornes ( 6, 7, 8, 9 ) de tension continue des deux onduleurs ( 4, 5 ) à impulsions sont montées, par un dispositif ( S1, S2, S3 ) de commutation, en série sur le premier dispositif ( 13 ) d'alimentation en courant continu et une tension de sortie du redresseur est répartie sur les deux onduleurs ( 4, 5 ) à impulsions,
- un dispositif de commande des deux onduleurs ( 4, 5 ) à impulsions commande dans le mode de fonctionnement de manière à servir d'onduleur, du courant passant du deuxième dispositif ( 11 ) d'alimentation en courant continu au moteur ( 1 ) à courant alternatif par les deux onduleurs ( 4, 5 ) à impulsions,
- le dispositif de commande des deux onduleurs ( 4, 5 ) à impulsions commande en mode de charge de manière à ce que l'un des onduleurs ( 4 ) à impulsions serve d'onduleur et de manière à ce que l'autre des onduleurs ( 5 ) à impulsions serve de redresseur de sorte que du courant passe du premier dispositif ( 13 ) d'alimentation en courant continu dans le premier ( 2 ) des deux enroulements en étoile par l'onduleur ( 4 ) à impulsions fonctionnant en onduleur, de là par induction dans le deuxième ( 3 ) des deux enroulements en étoile et ensuite par l'onduleur ( 5 ) à impulsions fonctionnant en redresseur dans le deuxième dispositif ( 11 ) d'alimentation en courant continu, et en ce
- dans le mode de charge, les bornes ( 7, 9 ) de tension continue de l'onduleur ( 5 ) à impulsions servant de redresseur sont reliées par le dispositif ( S1, S2, S3 ) de commutation en parallèle sur le deuxième dispositif ( 11 ) d'alimentation en courant continu.

2. Système d'entraînement suivant la revendication 1, dans lequel les onduleurs ( 4, 5 ) à impulsion sont commandés dans le mode de charge par le dispositif de commande de manière à ce que la transmission du courant s'effectue d'une manière monophasée par les deux enroulements ( 2, 3 ) en étoile.

3. Système d'entraînement suivant l'une des revendications précédentes, dans lequel les onduleurs ( 4, 5 ) à impulsion sont commandés dans le mode de charge par le dispositif de commande de manière à ce que la transmission du courant par les deux enroulements ( 2, 3 ) en étoile soit bloquée dans une phase et de manière à ce que les deux autres phases soient décalées de 180 °.

4. Véhicule ayant un dispositif d'entraînement suivant l'une des revendications précédentes.

5. Procédé pour faire fonctionner un véhicule comprenant :
- un premier dispositif ( 13 ) d'alimentation en tension continue,
- un deuxième dispositif ( 11 ) d'alimentation en courant continu, qui peut être chargé et qui comprend un accumulateur, et un moteur ( 1 ) à courant alternatif, dans lequel
- le moteur ( 1 ) à courant alternatif a deux enroulements ( 2, 3 ) en étoile,
- les deux enroulements ( 2, 3 ) en étoile sont disposés respectivement dans les mêmes encoches,
- chacun des deux enroulements ( 2, 3 ) en étoile est commandé respectivement par un onduleur ( 4, 5 ) à impulsions, **caractérisé en ce que** le premier dispositif ( 13 ) d'alimentation en courant continu a un dispositif d'enfichage sur un réseau public d'alimentation et un redresseur,
- dans un mode de fonctionnement, les bornes ( 6, 7, 8, 9) de tension continue des deux onduleurs ( 4, 5 )à impulsions sont montées, par un dispositif ( S1, S2, S3 ) de commutation, en parallèle sur le premier et en parallèle sur le deuxième dispositif ( 11, 13 ) d'alimentation en courant continu,
- dans un mode de charge, les bornes ( 6, 7, 8, 9 ) de tension continue des deux onduleurs ( 4, 5 ) à impulsions sont montées par le dispositif ( 51, 52, 53 ) de commutation, en série sur le premier dispositif ( 13 ) d'alimentation en courant continu et une tension de sortie du redresseur est répartie sur les deux onduleurs ( 4, 5 ) à impulsions,
- les deux onduleurs ( 4, 5 ) à impulsions sont commandés dans le mode de fonctionnement de manière à servir d'onduleur du courant passant du deuxième dispositif ( 13 ) d'alimentation au courant continu au moteur ( 1 ) à courant alternatif par les deux onduleurs ( 4, 5 ) à impulsions,
- les deux onduleurs ( 4, 5 ) à impulsions sont commandés dans le mode de charge de manière à ce que l'un des onduleurs ( 4, 5 ) à impulsions serve d'onduleur et l'autre des onduleurs ( 4, 5 ) à impulsions de redresseur de sorte que du courant passe du premier dispositif ( 13 ) d'alimentation en courant continu dans le premier des deux enroulements ( 2 ) en étoile par l'onduleur ( 4 ) à impulsions fonctionnant en onduleur, de là par induction dans le deuxième des deux enroulements ( 3 ) en étoile et ensuite par l'onduleur ( 5 ) à impulsions fonctionnant en redresseur dans le deuxième dispositif ( 11 ) d'alimentation en courant continu, et **en ce que**
- dans le mode de charge, les bornes ( 7, 9 ) de tension continue de l'onduleur ( 5 ) à impulsions servant de redresseur sont montées par le dispositif ( S1, S2, S3 ) de commutation en parallèle sur le deuxième dispositif ( 11 ) d'alimentation en courant continu.
